# EUROPEAN PATENT SPECIFICATION

(11) **EP 3 285 564 B1**
(45) Date of publication and mention of the grant of the patent: **13.09.2023**
(21) Application number: 16773738.6
(22) Date of filing: 21.03.2016
(51) Int. Cl.: A01G 27/00, A01G 13/02

(54) **IRRIGATION APPARATUS**
BEWÄSSERUNGSVORRICHTUNG
APPAREIL D'IRRIGATION

(30) Priority: 01.04.2015 US 201514675907
(43) Date of publication of application: 28.02.2018
(73) Proprietor: 4D Holdings, LLC, Studio City, CA 91607 (US)
(72) Inventor: MARSHALL, Aaron, Valley Village, CA 91607 (US)
(74) Representative: WP Thompson
(86) International application number: PCT/US2016/023353
(87) International publication number: WO 2016/160386

(56) References cited:
- EP-A1- 2 347 646
- DE-A1- 19 542 998
- US-A- 4 087 938
- US-A- 4 268 992
- US-A- 4 336 666
- US-A- 4 870 781
- US-A1- 2013 067 810
- US-A1- 2015 282 441
- US-B1- 6 385 900
- US-B1- 6 601 339

## Description

### TECHNICAL FIELD

The present invention relates to the field of horticultural irrigation apparatus and watering systems, and more particularly, to an automated irrigation apparatus and system for feeding or watering plants and the like.

### BACKGROUND

Plants typically require feeding or watering or otherwise supplementing with liquid nutrition at least once weekly to survive. During occasions when an individual plans to be away from home for an extended period of time, the individual needs to make arrangements for the care of his or her plants. This involves the cost and inconvenience of hiring help to care for the plants and compromises the individual's privacy in the home or personal space.

Various self-watering plant watering or feeding apparatus and systems have been developed, but such apparatus and systems are not specifically designed for simple, convenient, and economical use due to their complex construction, and are not easily adaptable to an existing plant container or medium. It would thus be desirable to have an improved automated irrigation apparatus and system for feeding or watering plants and the like, which avoids the disadvantages of the known apparatus and systems.

Prior art document EP 2 347 646 A1 discloses a growth protector for a plant, which is formed from a plate-like material. The growth protector comprises a growth opening arranged in the protector, wherein the stem of the plant can be fitted, and an installation slit, which extends from the edge of the growth opening to the outer edge of the protector. A container part has further been arranged in connection with the protector, in the bottom of which cavities have been arranged, which form the surface of the protector, which is meant to be against the ground. Irrigation water can be filled into the container part.

### SUMMARY

In the present invention, there is provided herein an irrigation apparatus for dispersing liquid through a plant growing medium, as defined in claim 1.

The apparatus includes a geometrically shaped container of variable size having an outer wall with an inner surface, an open top, and a base portion configured to cover the plant growing medium. The base portion is configured with a plurality of holes for receiving liquid therethrough. The container is configured with at least one center opening therethrough having an inner wall for receiving a plant. The at least one center opening has at least one longitudinal opening extending therefrom to the outer wall to allow placement of the container on the plant or to allow removal of the container from the plant. The container is configured with a plurality of geometrically shaped stakes of variable size extending therefrom the base portion for providing stability for the apparatus to be secured in the plant growing medium. The plurality of holes are configured as raised half-circles or louvers to block light and receive air, water, and nutrients.

In certain embodiments, each corner of the base portion is configured with a hole to aid in the drainage of liquid from the container.

In certain embodiments, the outer wall of the container may be optionally configured with an adapter connectable to a variable size nozzle via a thread cap for use with a hose or pump system.

In certain embodiments, the container may be fabricated of a combination of translucent and opaque materials as separate parts or as an over mold that can be molded together such that the outer wall is translucent and the base portion is opaque for blocking light to the plant growing medium.

In certain embodiments, the at least one longitudinal opening is configured with an overhang lip portion at opposing sides for blocking light to the plant growing medium.

Various advantages of this disclosure will become apparent to those skilled in the art from the following detailed description, when read in light of the accompanying drawings.

### BRIEF DESCRIPTION OF THE DRAWINGS

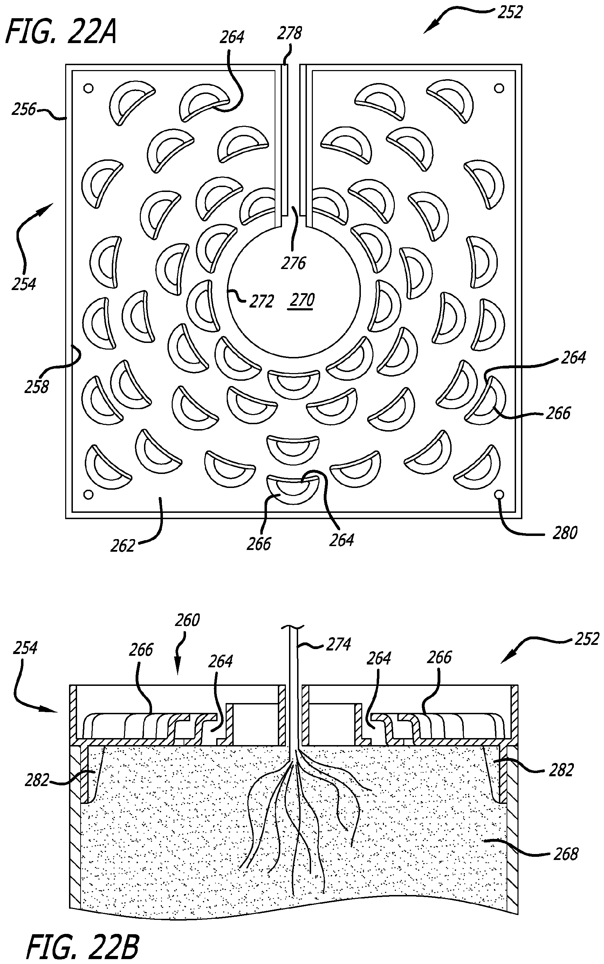

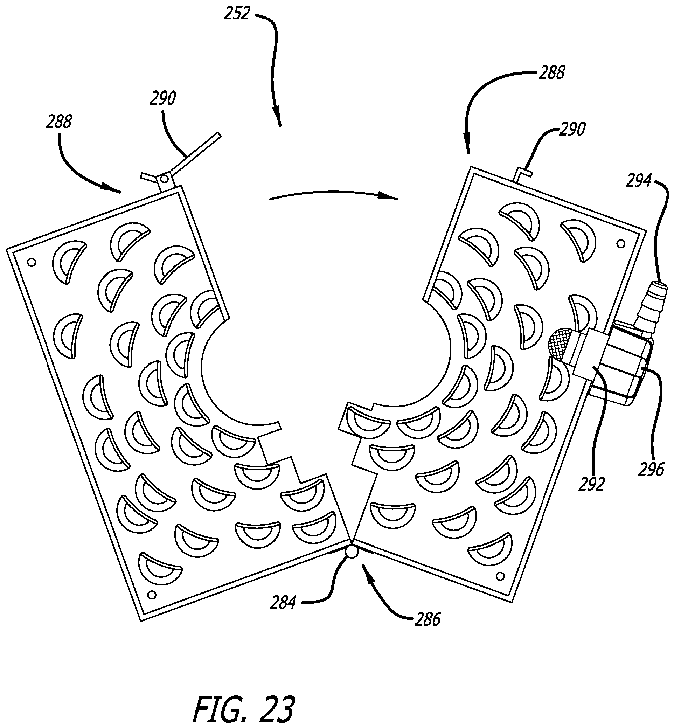

The irrigation apparatus of the present invention, as defined in claim 1, is illustrated in FIG.22A, FIG.22B and FIG.23.
FIG. 1 is a perspective view of an exemplary embodiment of the irrigation apparatus setting on top of a plant growing medium, according to the present disclosure.
FIGS. 2A-F are up close views of various geometric shapes of the irrigation apparatus of FIG. 1, according to the present disclosure.
FIG. 2G is an exemplary embodiment of the irrigation apparatus of FIG. 1, according to the present disclosure.
FIGS. 3A-B are side elevational views of the irrigation apparatus of FIG. 1 shown detached and having various male to female ratio configurations for the adjoining of first and second sides of the container, according to the present disclosure.
FIG. 4 is a side cross-sectional view of the base portion of the irrigation apparatus of FIG. 1 shown with a sloped or curved bottom.
FIG. 5 is a top cross-sectional view of the irrigation apparatus of FIG. 1, according to the present disclosure.
FIG. 6 is a side cross-sectional view of another exemplary embodiment of the irrigation apparatus of FIG. 1, according to the present disclosure.
FIG. 7 is a side cross-sectional view of another exemplary embodiment of the irrigation apparatus of FIG. 1, according to the present disclosure.
FIG. 8 is a side elevational view of an exemplary embodiment of an irrigation feeding system using the irrigation apparatus of FIG. 1, according to the present disclosure.
FIG. 9A is a front elevational view of a digital moisture meter used in accordance with the irrigation apparatus and irrigation feeding system of the present disclosure.
FIG. 9B is a side elevational view of the digital moisture meter of FIG. 9A connected to the outer wall of the container, according to the present disclosure.
FIG. 10 is a perspective view of an exemplary embodiment of the irrigation apparatus setting on top of a plant growing medium, according to the present disclosure.
FIG. 11 is an exploded perspective view of an exemplary embodiment of the irrigation apparatus and plant growing medium, according to the present disclosure.
FIG. 12 is an enlarged top view of another exemplary embodiment of the irrigation apparatus, according to the present disclosure.
FIG. 13 is side cross-sectional view of an exemplary embodiment of the irrigation apparatus of FIG. 10, according to the present disclosure.
FIG. 14 is a bottom perspective view of the irrigation apparatus of FIG. 10, according to the present disclosure.
FIG. 15 is a top perspective view of another exemplary embodiment of the irrigation apparatus of FIG. 10, according to the present disclosure.
FIG. 16 is an exploded top perspective view of an exemplary embodiment of the irrigation apparatus, according to the present disclosure.
FIG. 17 is a top perspective view of an exemplary embodiment of the irrigation apparatus as a circle, according to the present disclosure.
FIG. 18 is a bottom perspective view of the irrigation apparatus of FIG. 17, according to the present disclosure.
FIG. 19 is a top perspective view of another exemplary embodiment of the irrigation apparatus as a standalone square top cover shown with a plug and a 90 degree emitter cap connected to a hose, according to the present disclosure.
FIG. 20 is a top perspective view of the irrigation apparatus of FIG. 19 shown with a pair of 60 degree emitter caps connected to a hose, according to the present disclosure.
FIG. 21 is a side elevational view of an exemplary embodiment of an irrigation feeding system using the irrigation apparatus of FIG. 13, according to the present disclosure.
FIG. 22A is a top view of an exemplary embodiment of an irrigation apparatus, according to the present disclosure.
FIG. 22B is a cross-sectional view of the irrigation apparatus of FIG. 22A, according to the present disclosure.
FIG. 23 is an enlarged top view of another exemplary embodiment of the irrigation apparatus, according to the present disclosure.
FIG. 24A is a top perspective view of an exemplary embodiment of an irrigation apparatus, according to the present disclosure.
FIG. 24B is a partial bottom perspective view of the irrigation apparatus of FIG. 24A, according to the present disclosure.
FIG. 25 is a top perspective view of an exemplary embodiment of a holed dripper cap, according to the present disclosure.
FIG. 26 is an elevational side view of a barbed louver insert for use with the irrigation apparatus of FIG. 24A, according to the present disclosure.
FIG. 27 is a top plan view of another exemplary embodiment of the irrigation apparatus of FIG. 19 shown with a pair of over mold rings, according to the present disclosure.
FIG. 28 is a cross-sectional view taken along the line 28-28 of the irrigation apparatus of FIG. 27.
FIG. 29 is an exploded top perspective view of an exemplary embodiment of a dripper, according to the present disclosure.
FIG. 30 is an exploded top perspective view of another exemplary embodiment of a dripper, according to the present disclosure.
FIG. 31 is an enlarged top perspective view of an exemplary embodiment of a nozzle for use with a dripper, according to the present disclosure.
FIG. 32 is a cross-sectional view of the nozzle of FIG. 31, according to the present disclosure.
FIG. 33 is a top perspective view of a piercing nozzle for use with a dripper for piercing a hose, according to the present disclosure.
FIG. 34 is a top plan view of a series of piercing nozzles affixed to a series of drippers from a single line of pressure of the hose source, according to the present disclosure.
FIG. 35 is a top perspective view of a T-shaped nozzle for use with a dripper, according to the present disclosure.
FIG. 36 is a top plan view of a series of T-shaped nozzles affixed to a series of drippers from a single line of pressure of the hose source, according to the present disclosure.
FIG. 37 is a side elevational view of an exemplary embodiment of the irrigation feeding system of FIG. 21 with a pressured fogger, according to the present disclosure.

### DETAILED DESCRIPTION

This disclosure is not limited to the particular systems, methodologies or protocols described, as these may vary. The terminology used in this description is for the purpose of describing the particular versions or embodiments only, and is not intended to limit the scope.

As used in this document, the singular forms "a," "an," and "the" include plural reference unless the context clearly dictates otherwise. Unless defined otherwise, all technical and scientific terms used herein have the same meanings as commonly understood by one of ordinary skill in the art. All sizes recited in this document are by way of example only, and the invention is not limited to structures having the specific sizes or dimensions recited below. Nothing in this document is to be construed as an admission that the embodiments described in this document are not entitled to antedate such disclosure by virtue of prior invention. As used herein, the term "comprising" means "including, but not limited to."

In consideration of the figures, it is to be understood for purposes of clarity certain details of construction and/or operation are not provided in view of such details being conventional and well within the skill of the art upon disclosure of the document described herein.

The following terms and phrases shall have, for purposes of this application, the respective meanings set forth below:
The terms "feeding" and "watering" are used interchangeably herein and are intended to have the same meaning with respect to the treating of a plant with liquid nutrition so that the plant may grow and flourish.

The terms "dripper" and "emitter" are used interchangeably herein and are intended to have the same meaning with respect to drip irrigation in assuring that a uniform rate of flow of liquid is achieved.

The term "irrigation" refers to the application of water to soil or another medium by artificial means to foster plant growth.

The terms "growing medium," "medium," or "media" refer to a liquid or solid in which organic structures such as plants are placed to grow.

The term "liquid" refers to any form of liquid nutrition for a plant, including water and the like. The phrases "pressure compensating subsurface dripper or emitter" and "subsurface pressure compensating dripper or emitter" are used interchangeably herein and refer to a dripper or emitter that is forced into the growing medium while not compromising the flow of the drip by encasing the drip and not allowing anything to interfere with the dripper or emitter's set course. The term "Rockwool" refers to the inorganic mineral based horticultural grade Rockwool primarily sold as a hydroponic substrate in the horticultural industry.

The phrase "substrate growing system" is a hydroponic system in which the root zone is physically supported by media and the plants are fed by applying nutrient solution to the media.

The irrigation apparatus and irrigation feeding system of the present disclosure pertains to a self-watering irrigation apparatus and feeding system that allows a user to measure the amount of water as it is distributed onto a plant instead of pre-measuring or doing a count; provides for a slow thorough and even distribution of water or other liquid nutrition; prevents algae, mold, and weeds from growing in the plant growing medium by covering the medium in its entirety; low cost to manufacture; fabricated from inexpensive materials; durable; and easy to assemble and disassemble, among other desirable features as described herein.

It is contemplated by the present disclosure that the irrigation apparatus and irrigation feeding system may be used with any suitable plant growing medium (e.g., Rockwool, soil, and the like) in a substrate growing system.

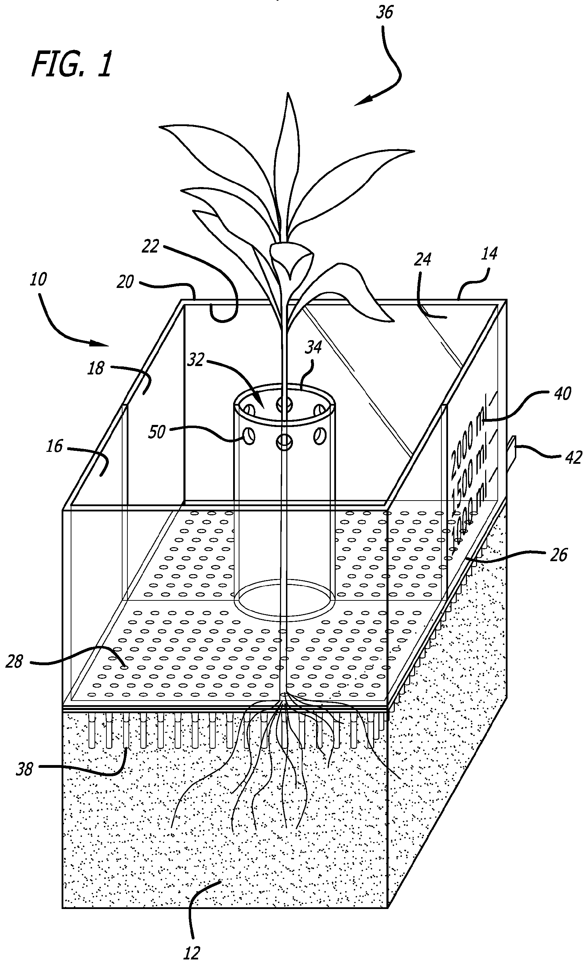

Referring now to FIG. 1 is a perspective view of an exemplary embodiment of the irrigation apparatus 10 setting on top of a plant growing medium 12 (e.g., Rockwool) according to the present disclosure. The irrigation apparatus 10 includes a geometrically shaped container 14 of variable size configured to be detachable in at least two pieces at a first side 16 and a second side 18. The container 14 has an outer wall 20 with an inner surface 22, an open top 24, and a base portion 26 configured to cover the plant growing medium 12. The base portion 26 is configured with a plurality of holes 28 for receiving liquid 30 therethrough.

As illustrated in FIG. 1, the container 14 is configured with at least one center opening 32 therethrough and includes an inner wall 34 for receiving a plant 36 when the first side 16 and the second side 18 of the container are adjoined together as a single container. The plurality of holes 28 are each configured with a dripper 38 for receiving liquid 30 extending therethrough the base portion 26 such that the dripper feeds the plant growing medium 12 at variable flow rates and intervals and provides stability for the apparatus 10 to be secured in the plant growing medium. It should be understood that the dripper may be configured to feed the plant growing medium at any suitable flow rate and interval in accordance with the present disclosure.

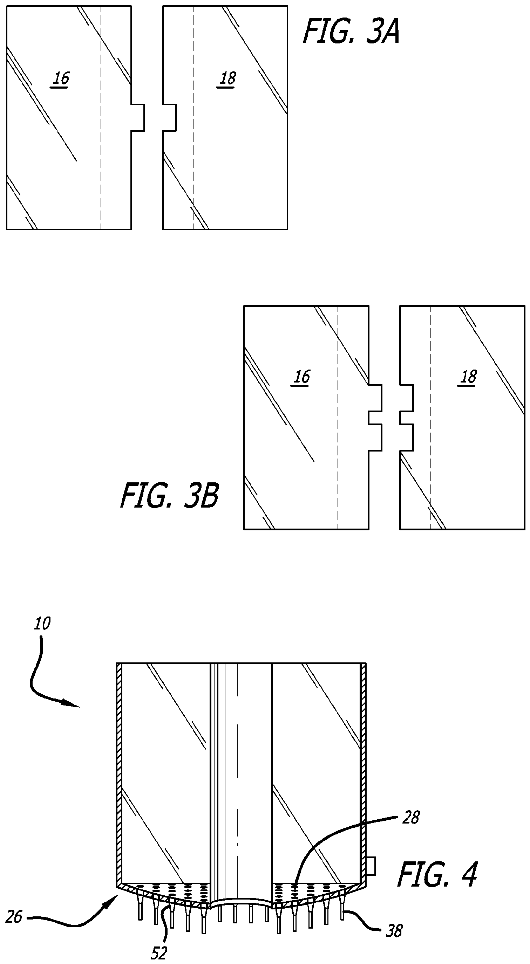

In accordance with the present disclosure, the geometrically shaped container 14 can be fabricated either as a single piece or as at least two separate pieces that are configured to be adjoined together at the first side 16 and the second side 18. The at least two piece configuration allows for easy installation or tear down of the container 14 by the user. In some embodiments, the first side 16 and the second side 18 are configured to be adjoined or secured together via at least a one male to one female ratio (FIG. 3A) or other suitable combinations of male to female ratios, including, but not limited to, male to two female, two male to three female, or two male to two female (FIG. 3B), and the like. It should be understood that the first side 16 and the second side 18 may be adjoined or secured together via any suitable notch configured within the female and end of the male.

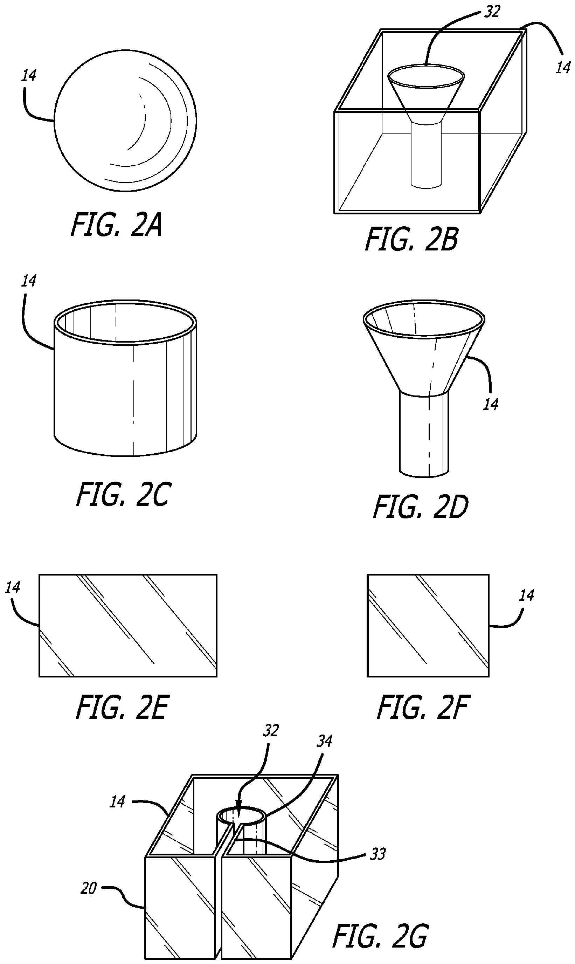

In one embodiment, the geometrically shaped container 14 can be a circle (FIG. 2A), cube (FIG. 2B), cylinder (FIG. 2C), conical (FIG. 2D), rectangle (FIG. 2E), square (FIG. 2F), or any other suitable geometrical shape. It should be understood that the container can be manufactured to suit any plant size growing medium and is sized to scale. For example, the container may be a cube with dimensions of 203.2mm (8 inches) (height) x 203.2mm (8 inches) (width) x 203.2mm (8 inches) (length) and outer walls of 4.8mm (3/16 of an inch) thick such that the container fits a Rockwool cube of same approximate dimensions.

The container may be fabricated of any sturdy material capable of retaining liquids or fluids (e.g., water), including metal, plastic, and the like.

In one embodiment, the geometrically shaped container 14 is transparent or clear having a measuring table 40 disposed thereon the inner surface 22, as illustrated in FIG. 1. It should be understood that the amount of volume each unit or container 14 can hold will be according to scale such that a plant growing in a 101.6mm (4 inches) x 101.6mm (4 inches) x 101.6mm (4 inches) Rockwool cube does not require the same amount of liquid nutrition as a plant in a five gallon pot. For example, the measuring table 40 for a plant growing in a 203.2mm (8 inches) x 203.2mm (8 inches) x 203.2mm (8 inches) Rockwool cube will allow up to approximately 2000 ml of liquid nutrition. Alternatively, the measuring table 40 for a plant growing in a 152.4mm (6 inches) x 152.4mm (6 inches) x 152.4mm (6 inches) Rockwool cube will allow up to approximately 1200 ml of liquid nutrition.

In accordance with the present disclosure, the outer wall 20 of the container 14 may be configured with an adapter 42 for use with a hose 44 or pump 46 system, such that the irrigation apparatus 10 may be used in conjunction with the irrigation feeding system 48 disclosed herein. In some embodiments, the adapter 42 may be 12.7mm (0.5 inches) in size with a cap for use with or without the irrigation feeding system or a hose or pump system that the user may wish to apply. It should be understood that the adapter can be of any type and size suitable for connecting the hose to the container.

In some embodiments, the container 14 is configured to include a plurality of variable size openings 50 disposed on the inner wall 34 for use as a flood drain for excess liquid retained in the container during feeding of the plant 36 to be directed to the center of the plant growing medium 12. It should be understood that the openings 50 disposed on the outer wall can be of any suitable size or dimension, preferably within the range of from about 3.2 mm (1/8 of an inch) to about 25.4 mm (one inch). In one embodiment, the openings are configured to be about 3.2 mm (1/8 of an inch), such that excess liquid can flow therethrough and be directed to the areas where the plant requires additional moisture.

The at least one center opening 32 of the inner wall 34 for receiving the plant 36 may be circular (FIG. 1), conical (FIG. 2B), or cylindrical (FIG. 2C) to accommodate various sizes of plants. It should be understood that the container 14 may be configured with multiple center openings to allow multiple plants to be received. In one embodiment, the at least one center opening 32 is fabricated to have about a 50.8 mm (two inch) diameter, which enables the base of the plant 36 space to grow in the plant growing medium 12. It should be understood that the at least one center opening can be configured of any suitable size and is sized to scale relative to the size of the container.

Referring to FIG. 2G is a side cross-sectional view of an exemplary embodiment of the irrigation apparatus of FIG. 1 according to the present disclosure. Specifically, the at least one center opening 32 can be configured to have at least one longitudinal opening 33 extending therefrom to the outer wall 20 to allow placement of the container 14 on or removal of the container from the plant 36. In this embodiment, the container is configured to bend to fit around the base of variable size plants. The at least one longitudinal opening 33 is configured to have the same height wall as the outer wall 20 of the container 14 while receding to a variable degree to the inner wall 34 of the at least one center opening 32.

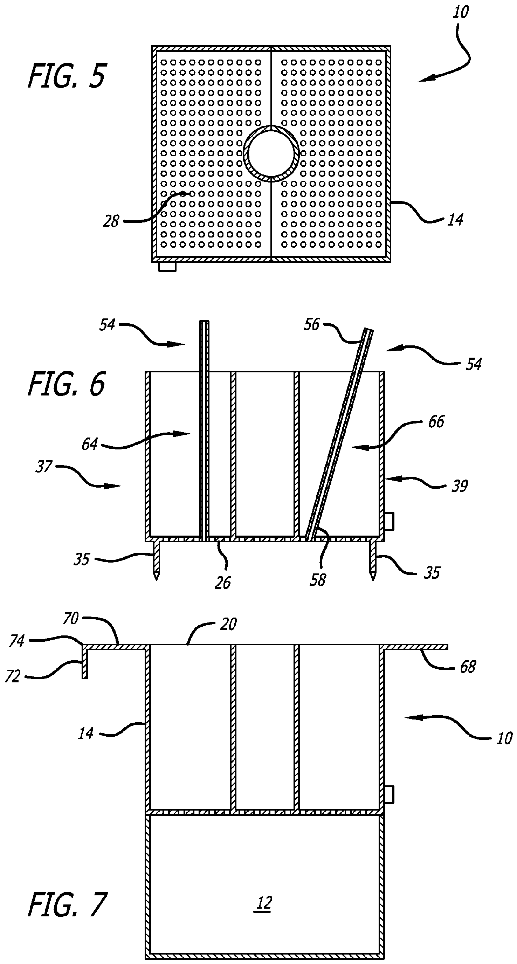

FIG. 4 is a side cross-sectional view of the base portion 26 of the irrigation apparatus 10 of FIG. 1 shown with a sloped or curved bottom. In some embodiments, the base portion 26 may be flat (FIG. 1) or curved (FIG. 4). The base portion 26 may be configured to decline outward to inward from about 9.53mm (3/8 of an inch) to about 4.8mm (3/16 of an inch) in the curved embodiment such that the liquid 30 flows downward through the plurality of holes 28 into the dripper 38 for feeding the plant growing medium 12. The plurality of holes 28 of the base portion 26 may be configured to be about 6.4mm (1/4 of an inch) and gradually recede to about a 1.6mm (1/16 of an inch) to about 0.4mm (1/64 of an inch) chamber 52 of the dripper 38. It should be understood that the plurality of holes and the dripper can be sized to scale as appropriate. The number of drippers 38 used in conjunction with the irrigation apparatus 10 can range from about one or greater, according to the present disclosure. FIG. 5 is a top cross-sectional view of the irrigation apparatus 10 of FIG. 1 according to the present disclosure. In some embodiments, the plurality of holes 28 of the base portion 26 are variably sized such that the holes retain the liquid in the container 14 for about 10 to about 60 minutes during feeding of the plant 36. It should be understood that the plurality of holes of the base portion can be configured to retain the liquid in the container for other suitable time intervals or periods other than disclosed herein during feeding of the plant.

FIG. 6 is a side cross-sectional view of another exemplary embodiment of the irrigation apparatus according to the present disclosure. Specifically, the container 14 can be configured with at least two stakes 35 disposed at a first end 37 and a second end 39 of the container for securing the container in the plant growing medium 12. In accordance with the present disclosure, the at least two stakes 35 can be used when the dripper 38 is laser tubing.

Referring further to FIG. 6, the container 14 may include at least one longitudinal section 54 having a first end 56 and a second end 58 such that the second end is attached to the base portion 26. The longitudinal section 54 is configured with an opening 60 therethrough for receiving a support structure 62, such as a bamboo, wood, or plastic stick, from the first end 56 to the second end 58 such that at least a portion of the support structure is positioned in the plant growing medium 12 for providing additional support to the plant and plant growing medium 12. In one embodiment, the at least one longitudinal section 54 is about 6.4mm (1/4 inch) thick and the opening 60 is about 6.4mm (1/4 inch) to about 12.7mm (1/2 inch) wide according to scale. The at least one longitudinal section 54 may be configured to be positioned perpendicular 64 or angled 66 in relation to the base portion 26. It should be understood that the at least one longitudinal section can be configured of any suitable size and is sized to scale.

FIG. 7 is a side cross-sectional view of another exemplary embodiment of the irrigation apparatus 10 according to the present disclosure. In particular, the container 14 includes an overhang lip portion 68 formed on a top edge 70 of the outer wall 20 for blocking light to the plant growing medium 12. By covering the plant growing medium 12 from light, the irrigation apparatus 10 prevents algae, mold, and weeds from growing in the plant growing medium. In another embodiment, the overhang lip portion 68 includes a downward lip 72 extending therefrom a first end 74 of the overhang lip portion for blocking light to the plant growing medium 12. It should be understood that the overhang lip portion and downward lip can be of any suitable size such that light is blocked to the plant growing medium and is sized to scale. The overhang lip portion 68 and downward lip 72 may be fabricated of any opaque material suitable for blocking light, including metal, plastic, stone, wood, and the like.

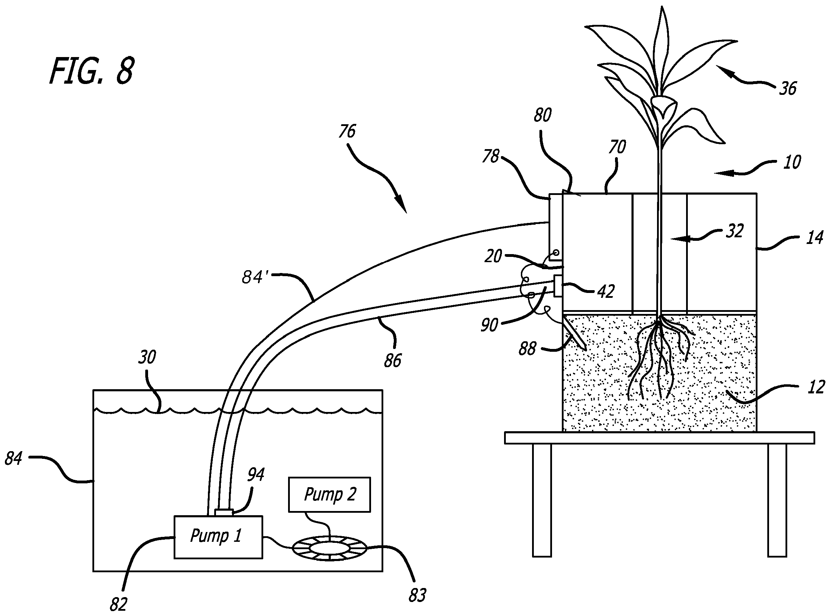

FIG. 8 is a side elevational view of an exemplary embodiment of the irrigation feeding system using the irrigation apparatus of FIG. 1 according to the present disclosure. The irrigation feeding system 76 for dispersing liquid 30 through a plant growing medium 12 includes the irrigation apparatus 10 as previously disclosed above. In some embodiments, the container 14 is configured to be detachable in at least two pieces at first side 16 and second side 18. The first side 16 and second side 18 are configured to be adjoined or secured together via at least one male to one female ratio or other combinations of male to female ratios as previously disclosed above. The irrigation feeding system 76 further includes a digital moisture meter 78 removably connected to the outer wall 20 for monitoring moisture levels of the plant growing medium 12.

The digital moisture meter 78 can be connected to the outer wall 20 of the container 14 via a hinged clip or clamp 80 integral to the digital moisture meter or separate therefrom or via a material that slides on to the top edge 70 of the outer wall 20.

At least one moisture sensor 88 for monitoring moisture levels of the plant growing medium 12 may be optionally used in combination with the digital moisture meter 78 such that the at least one moisture sensor is optimally positioned at a variable angle in the plant growing medium proximate to the digital moisture meter as shown in FIG. 8. In some embodiments, the at least one moisture sensor 88 may be positioned at about a 45 degree angle from the digital moisture meter 78 such that the sensor penetrates to the approximate center of the plant growing medium 12 for an accurate reading.

A submersible pump 82 positioned inside a liquid holding reservoir 84 pumps liquid to the irrigation apparatus 10. The submersible pump can be any suitable aquarium pump as used in fish tank aquariums. The liquid holding reservoir may be fabricated of any sturdy material capable of retaining liquids or fluids (e.g., water), including metal, plastic, and the like. The submersible pump 82 is configured to be connected to the digital moisture meter 78 by at least one wire 84' for communication therewith the digital moisture meter. The wire can be connected from the pump to the digital moisture meter via a waterproof connection of the type manufactured by King Innovation (O'Fallon, MO) called DRYCONN^{®}.

In some embodiments, the irrigation feeding system 76 may be used with a plurality of submersible pumps 82 on a submersible power strip 83 having a single power supply.

The irrigation feeding system 76 further includes a hose 86 having a first end 90 and a second end 92 such that the first end of the hose is configured to be connected to an adapter 94 disposed on the submersible pump 82 and the second end of the hose is configured to be connected to adapter 42 disposed on the outer wall 20 of the container 14. Liquid 30 is pumped from the liquid holding reservoir 84 through the hose 86 to the container 14 such that liquid is dispersed through the plant growing medium 12 at appropriate flow rates and intervals when the plant 36 reaches a predetermined moisture and humidity level. It should be understood that the irrigation feeding system disperses liquid into the plant growing medium at any appropriate flow rate and interval when a predetermined moisture and humidity level is reached by the plant. For example, a volume of 2000 ml of liquid is dispersed into the plant growing medium within a period of about 10 minutes.

The irrigation apparatus and irrigation feeding system of the present disclosure can be used with any suitable drippers or emitters, such as those with an extremely small hole in the tube (e.g., soaker hose, porous pipe, drip tape, laser tubing), those that work well on very low-pressure systems (e.g., short-path emitters), and those that are less likely to clog up (e.g., tortuous-path or turbulent-flow emitters).

Drippers or emitters are manufactured in a variety of different flow rates. The most common flow rates, suitable for use with the irrigation apparatus and irrigation feeding system of the present disclosure, include as follows:
2.0 liters / hour - 1/2 gallon / hour
4.0 liters / hour - 1 gallon / hour
8.0 liters / hour - 2 gallons / hour

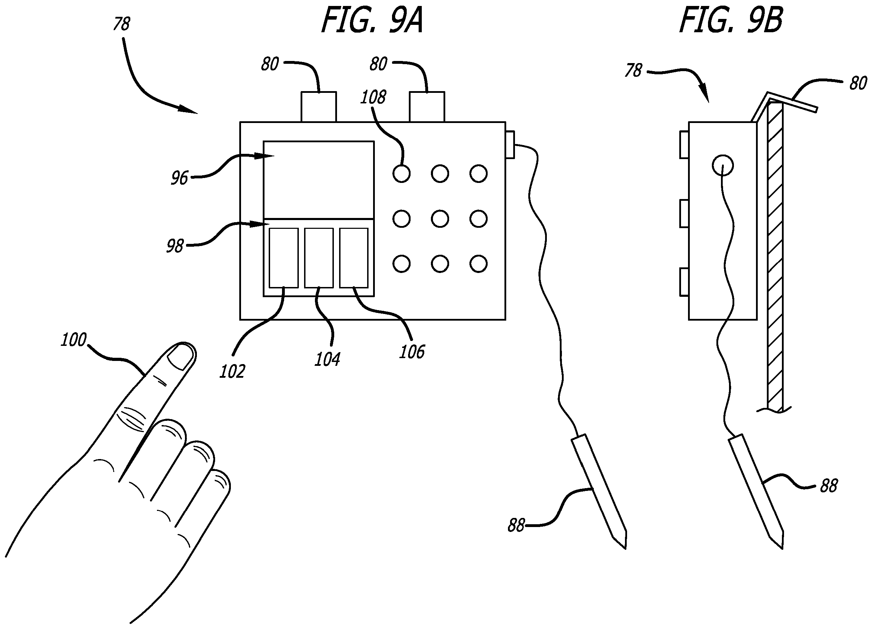

FIG. 9A is a front elevational view of a digital moisture meter 78 used in accordance with the irrigation apparatus 10 and irrigation feeding system 76 of the present disclosure. The digital moisture meter 78 includes a digital moisture display 96 such that when used with a plurality of manual functions, the display provides variable settings 98 for a specific moisture level at which a user 100 would like the irrigation feeding system to feed the plant growing medium. In some embodiments, the plurality of manual functions enable a user 100 to view feeding history 102, set times 104, feeding schedules 106, and manually operate the digital moisture meter via an on/off button or switch 108. Specifically, feeding history may include the number of times the plant has fed since the last time a user has checked as well as the dates and times the plant has fed. Setting times include use of a clock for setting how many seconds and/or minutes the user would like the pump to be on in filling up the irrigation apparatus. Feeding schedules include use of a calendar for adjusting the moisture level of the plant to be a certain level for specific days, weeks, or months. The manual on/off button or switch enables the user to calculate how many seconds or minutes it takes to fill up the irrigation apparatus.

FIG. 9B is a side elevational view of the digital moisture meter 78 connected to the outer wall 20 of the container 14 by hinged clip or clamp 80 according to the present disclosure.

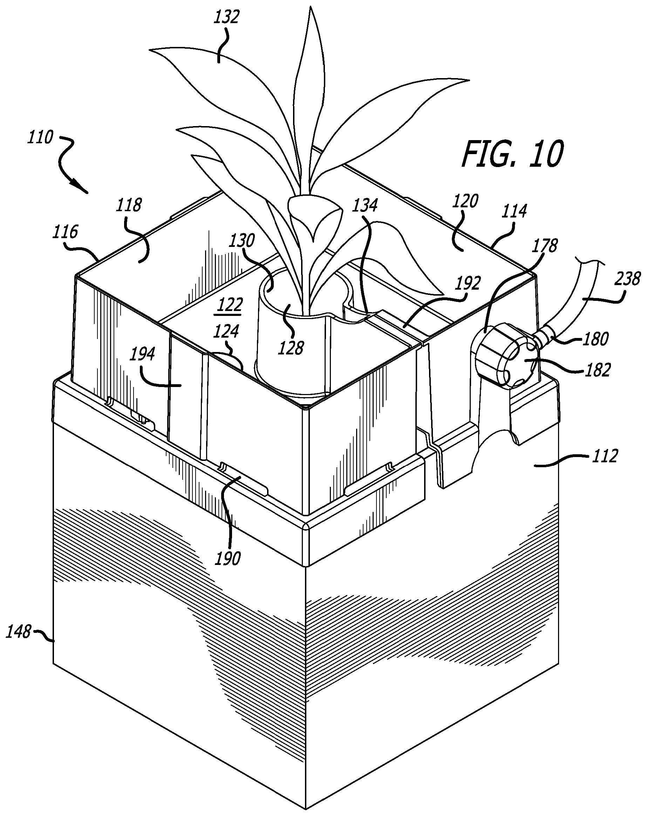

Referring now to FIG. 10 is a perspective view of an exemplary embodiment of irrigation apparatus 110 setting on top of a plant growing medium 112 (e.g., Rockwool) according to the present disclosure. The irrigation apparatus 110 includes a geometrically shaped container 114 of variable size having an outer wall 116 with an inner surface 118, an open top 120, and a base portion 122 configured to cover the plant growing medium 112. The base portion 122 is configured with a plurality of holes 124 for receiving liquid 126 therethrough.

The container 114 is configured with at least one center opening 128 therethrough and includes an inner wall 130 for receiving a plant 132. The at least one center opening 128 has at least one longitudinal opening 134 extending therefrom to the outer wall 116 to allow placement of the container 114 on the plant 132 or to allow removal of the container from the plant. In this embodiment, the container is configured to bend to fit around the base of variable size plants. The at least one longitudinal opening 134 is configured to have the same height wall as the outer wall 116 of the container 114 while receding to a variable degree to the inner wall 130 of the at least one center opening 128. It should be understood that the at least one center opening can be configured of any suitable size and is sized relative to the size of the container.

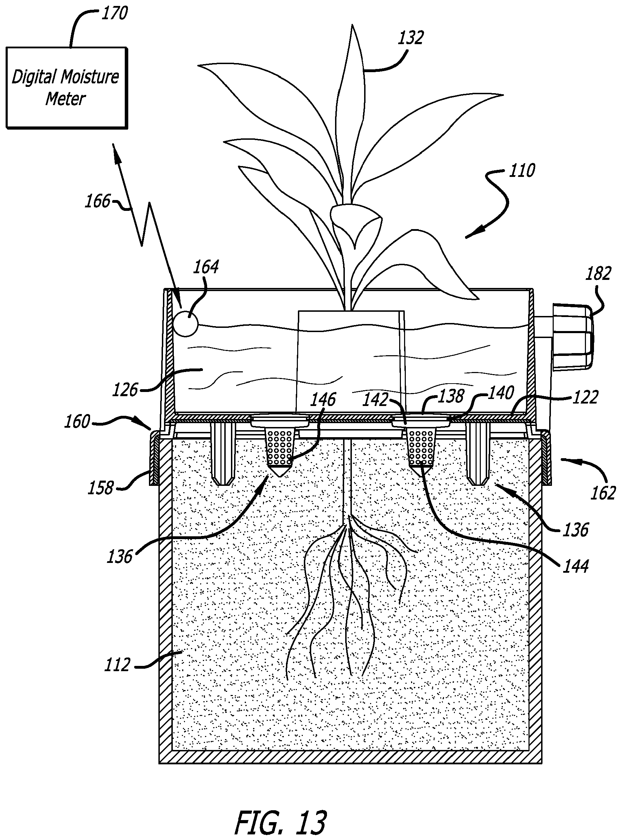

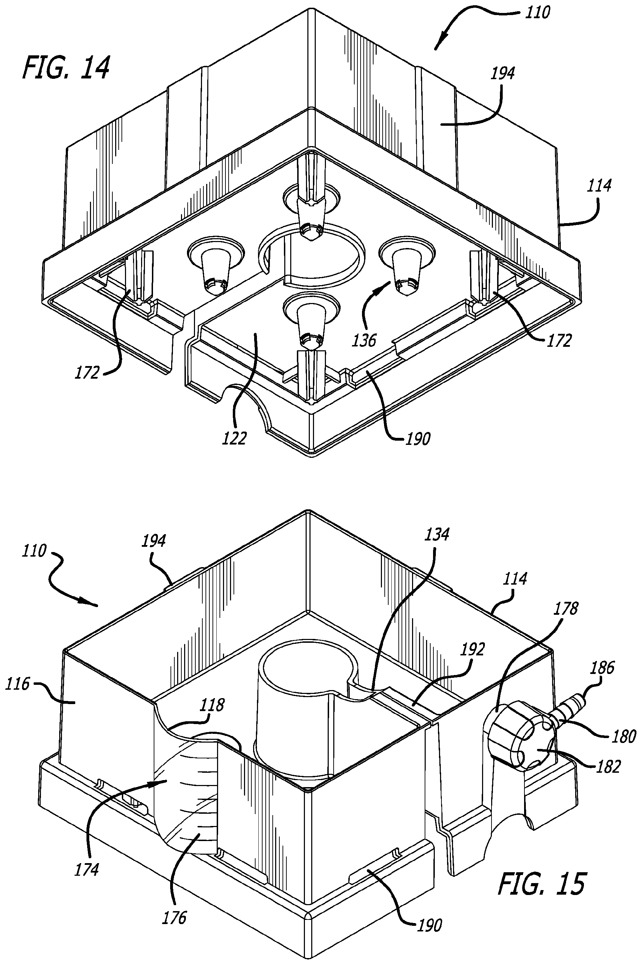

As illustrated in FIGS. 13 and 14, the plurality of holes 124 are configured with at least one dripper 136 for receiving liquid 126 extending therethrough the base portion 122 such that the at least one dripper feeds the plant growing medium 112 at variable flow rates and intervals and provides stability for the apparatus 110 to be secured in the plant growing medium. It should be understood that the dripper may be configured to feed the plant growing medium at any suitable flow rate and interval in accordance with the present disclosure.

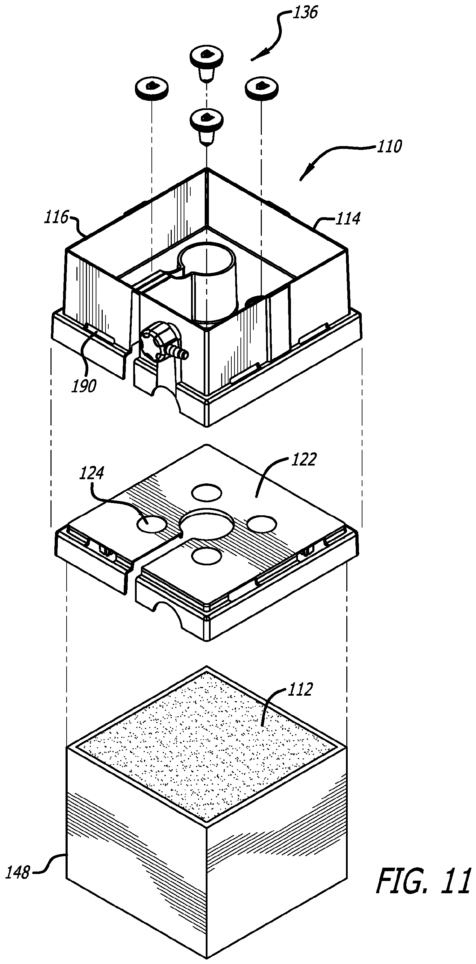

In accordance with the present disclosure, the at least one dripper 136 is configured to be interchangeable and replaceable with same or different variable flow rate emitters such that the at least one dripper can snap in, fit flush, screw in, or be releasably secured from the base portion 122, as illustrated in FIGS. 11-14 and 17-21. The at least one dripper 136 includes an emitter top plug 138, a variable emitter path section 140 to control liquid flow, an emitter bottom plug 142, and an emitter plunger 144, which encases the drip and is secured in the plant growing medium 112. The at least one dripper 136 may be configured with a plurality of holes 146 therethrough such that multiple drips originate from the at least one dripper. It should be understood that the drippers can come in different sizes (i.e., longer stakes or paths from the initial drip to the chosen depth of the media, large hole sizes in the tortuous path, different or alternative tortuous paths, etc.) such that they may be used as self-standing units for and/or along with other irrigation techniques (i.e., subsurface pressure compensating drippers or emitters built into a garden hose and/or in conjunction therewith).

The drippers or emitters disclosed herein can be fabricated of any suitable material, such as plastic (e.g., acrylonitrile butadiene styrene (ABS)), synthetic polymers (e.g., nylon), and the like.

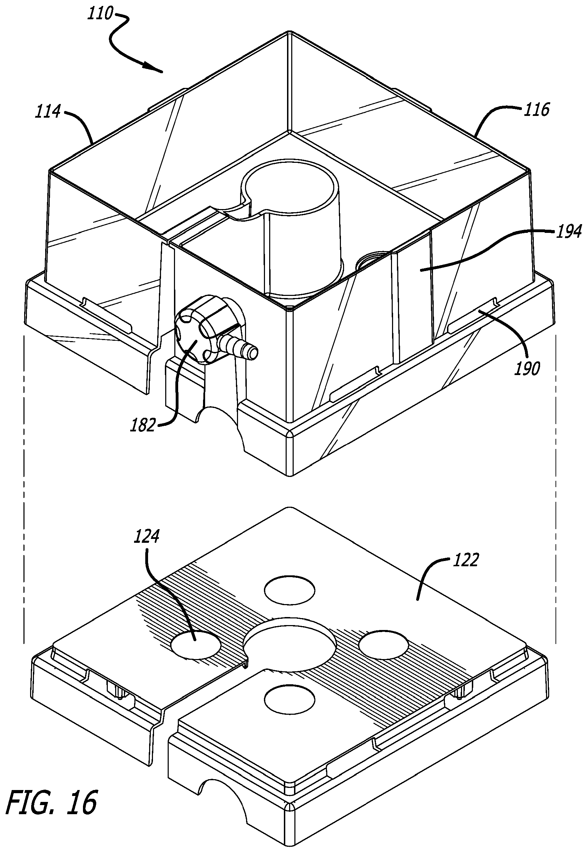

FIGS. 11 and 16 are exploded perspective views of an exemplary embodiment of the irrigation apparatus 110 according to the present disclosure. In accordance with the present disclosure, the container 114 may be fabricated of a combination of translucent and opaque materials as two separate parts or as an over mold that can be molded together such that the outer wall 116 of the container 114 is translucent and the base portion 122 is opaque for blocking light to the plant growing medium 112.

As with the earlier embodiments described herein, it should be understood that the container 114 may be fabricated of any sturdy material capable of retaining liquids or fluids (e.g., water), including metal, plastic, and the like. It should be further understood that the container 114 can be manufactured to suit any plant size growing medium and is sized to scale.

In one embodiment, the container 114 is configured to be secured flush with a plant container or pot 148 (FIG. 10) such that the container is disposed inside of the plant container or pot by at least one of screwing, clamping, and clipping.

In a further embodiment, the container 114 is configured to be used with structurally supported or adhered finishes of the plant container or pot 15 (FIGS. 10-11) such that a finished appearance of the container and plant container or pot may be achieved.

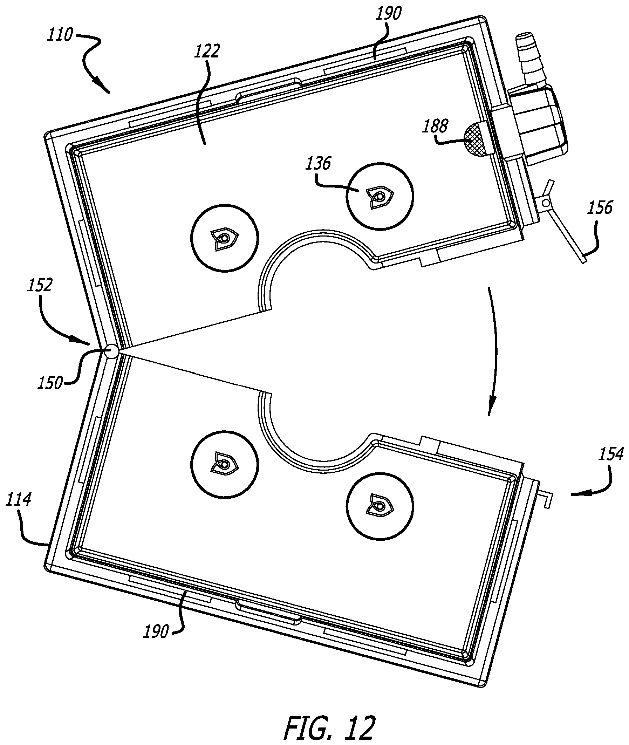

FIG. 12 is an enlarged top view of another exemplary embodiment of the irrigation apparatus 110 according to the present disclosure. The container 114 is configured with at least one hinge 150 or other suitable movable mechanism at a first end 152 such that the container is opened and closed at a second end 154 along with at least one of a clip or clamp 156 or via one male to one female ratio or other combinations of male to female ratios.

Referring further to FIG. 13 is side cross-sectional view of an exemplary embodiment of the irrigation apparatus 110 of FIG. 10 according to the present disclosure. In one embodiment, the container 114 may be configured with an overhang lip portion 158 formed on a bottom edge 160 of the outer wall 116 at opposing sides 162 for blocking light to the plant growing medium 112. It should be understood that the overhang lip portion can be configured of any suitable material, shape, and size for blocking light to the plant growing medium.

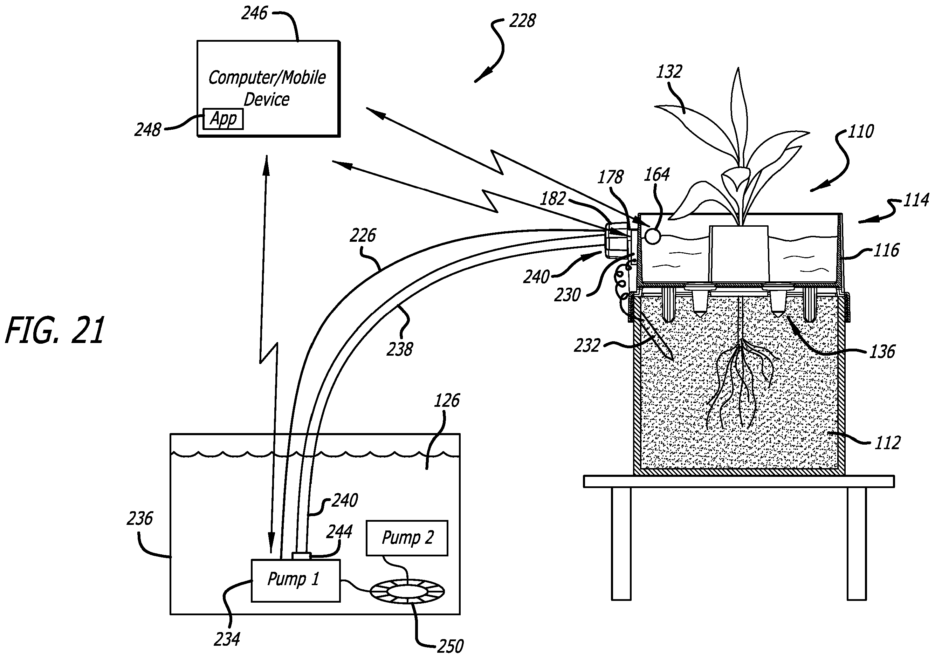

In some embodiments, a floating bobber 164 is triggered upon the liquid 126 reaching a predetermined volume in the container 114. The floating bobber 164 is configured to be wired or wireless such that a signal 166 can be transmitted to a submersible pump 168 (FIG. 21) or an intercepting device 170 (e.g., digital moisture meter) used in combination with the container 114 when the liquid 126 has reached a predetermined volume in the container.

FIG. 14 is a bottom perspective view of the irrigation apparatus 110 of FIG. 10 according to the present disclosure. In one embodiment, the container 114 is configured with a plurality of geometrically shaped stakes 172 of variable size extending therefrom the base portion 122 for providing stability of the container to the plant growing medium 112. It should be understood that the geometrically shaped stakes can be fabricated of any suitable material and size for providing stability of the container in the plant growing medium.

FIG. 15 is a top perspective view of another exemplary embodiment of the irrigation apparatus of FIG. 10 according to the present disclosure. In one embodiment, at least one side of the outer wall 116 is configured with a transparent insert 174 having a measuring table 176 disposed thereon the inner surface 118 for assisting the user with measuring while filling the container 114 with liquid.

In accordance with the present disclosure, the outer wall 116 of the container 114 may be configured with an adapter 178 connectable to a variable size nozzle 180 via a thread cap 182 for use with a hose or pump system (FIG. 21). In some embodiments, the variable size nozzle 180 is barbed and is closeable at one end 184 via a plug 186, as illustrated in FIG. 15. The thread cap 182 is configured to have a portable or built in filter 188 (FIG. 12) disposed therein.

In some embodiments, each side of the outer wall 116 is configured with at least one slot 190 for aeration, as illustrated in FIGS. 10-12 and 14-16. It should be understood that the at least one slot may be configured of any suitable size and shape for aeration.

In some embodiments, the at least one longitudinal opening 134 is configured with an overhang lip portion 192 at opposing sides for blocking light to the plant growing medium 112. It should be understood that the overhang lip portion can be configured of any suitable material, shape, and size for blocking light to the plant growing medium.

In further embodiments, the outer wall 116 is configured with a plurality of longitudinal braces 194 for supporting the container 114 in the plant growing medium 112 when the container is geometrically shaped as a cube, rectangle, or square. The longitudinal braces may be fabricated of any suitable material, such as plastic, rubber, and the like.

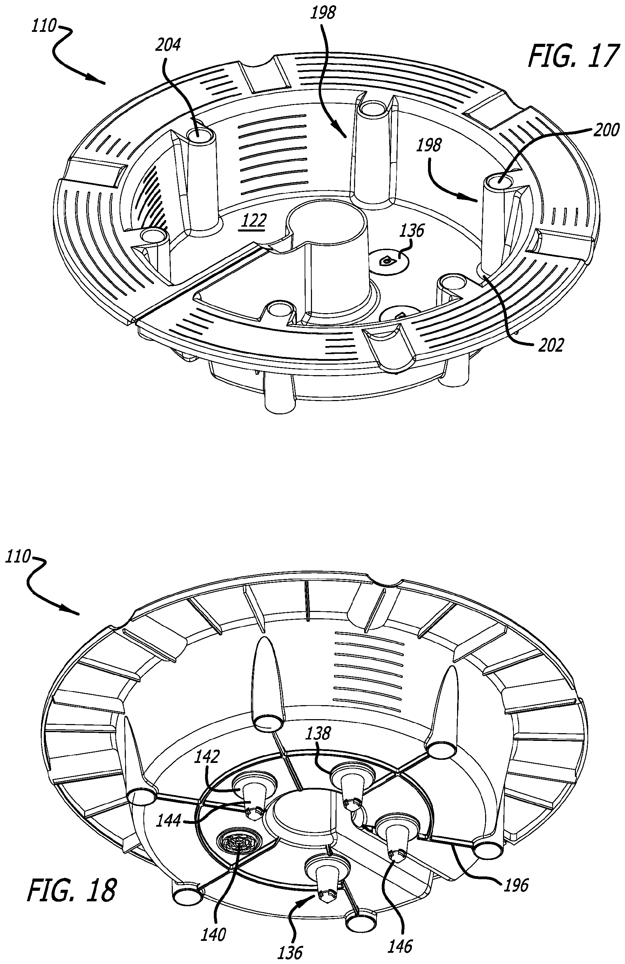

FIG. 17 is a top perspective view of an exemplary embodiment of the irrigation apparatus 110 geometrically shaped as a circle according to the present disclosure. In some embodiments, the base portion 122 is configured with a plurality of ribbed braces 196 for supporting the container 114 in the plant growing medium 112 when the container is geometrically shaped as a circle, cylinder, or cone.

As with previous embodiments (FIG. 6) of irrigation apparatus 10, the irrigation apparatus 110 geometrically shaped as a circle may include a plurality of longitudinal sections 198 having a first end 200 and a second end 202 such that the second end is attached to the base portion 122. The plurality of longitudinal sections 198 are configured with an opening 204 therethrough for receiving a support structure (FIG. 6), such as bamboo, wood, or plastic stick, from the first end 200 to the second end 202 such that at least a portion of the support structure is positioned in the plant growing medium for providing additional support to the plant and plant growing medium.

FIG. 18 is a bottom perspective view of the irrigation apparatus 110 of FIG. 17 according to the present disclosure.

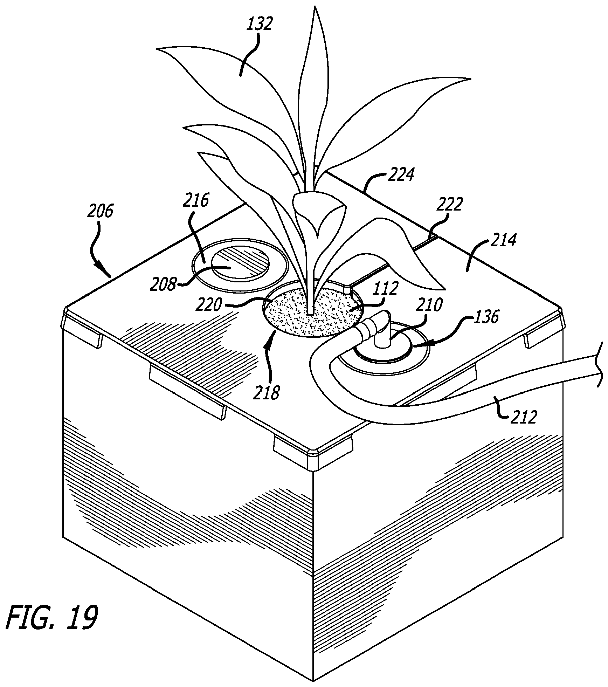

Referring now to FIG. 19 is a top perspective view of another exemplary embodiment of the irrigation apparatus as a standalone square top cover 206 shown with a plug 208 and a 90 degree emitter cap 210 connected to a hose 212 according to the present disclosure. In accordance with the present disclosure, the irrigation apparatus includes a geometrically shaped top 214 of variable size configured with a plurality of holes 216 for receiving liquid therethrough. The top 214 is configured with at least one center opening 218 therethrough having an inner wall 220 for receiving a plant 132. The at least one center opening 218 has at least one longitudinal opening 222 extending therefrom to an outer wall 224 to allow placement of the top 214 on the plant 132 or to allow removal of the top from the plant. The plurality of holes 216 are configured with at least one dripper 136 for receiving liquid extending therethrough the top 214 such that the at least one dripper feeds the plant growing medium 112 at variable flow rates and intervals and provides stability for the apparatus to be secured in the plant growing medium.

In some embodiments, the at least one dripper 136 is interchangeable and replaceable and includes a variable degree emitter cap 210 (e.g., 60 degree, 90 degree, etc.), a variable emitter path section 140 to control liquid flow, an emitter bottom 142, and an emitter plunger 144, which encases the drip and is secured in the plant growing medium 112.

In accordance with the present disclosure, a hose 212 is directly connected to the variable degree emitter cap 210 such that liquid can flow therethrough to the plant growing medium 112. It should be understood that the variable degree emitter cap 210, variable emitter path section 140, emitter bottom 142, and emitter plunger 144, can be used together as a single unit placed directly into the plant growing medium 112 without use of the geometrically shaped top 214 or any other unit or container 114 for dispersing liquid through the plant growing medium.

In further embodiments, the plurality of holes 216 not in use may be sealed with a plug 208 at top and bottom of the geometrically shaped top 214.

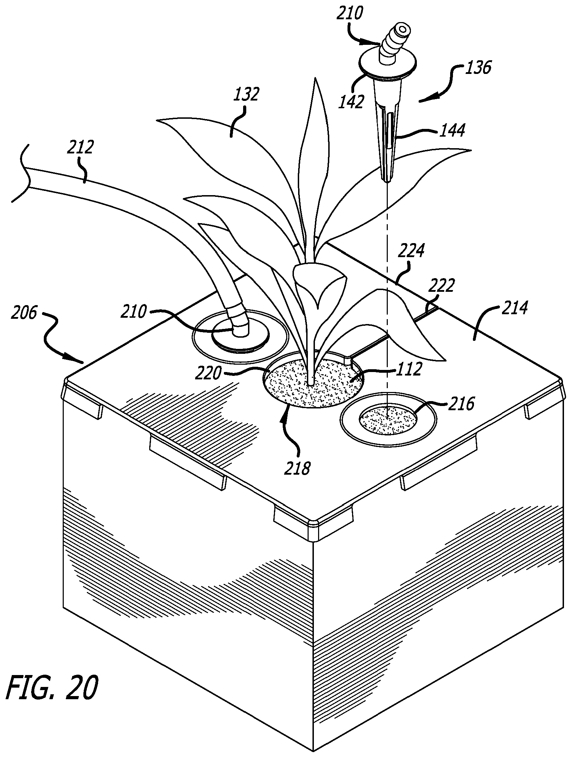

FIG. 20 is a top perspective view of the irrigation apparatus of FIG. 19 shown with a pair of 60 degree emitter caps 210 one of which is connected to a hose 212 according to the present disclosure.

FIG. 21 is a side elevational view of an exemplary embodiment of an irrigation feeding system 228 using the irrigation apparatus of FIG. 13 according to the present disclosure. The irrigation feeding system 228 for dispersing liquid 126 through a plant growing medium 112 includes the irrigation apparatus 110 as previously disclosed above.

The irrigation feeding system 228 further includes a digital moisture meter 230 removably connected to the outer wall 116 for monitoring moisture levels of the plant growing medium, at least one moisture sensor 232 for monitoring moisture levels of the plant growing medium 112 optionally used in combination with the digital moisture meter 230, a submersible pump 234 positioned inside a liquid holding reservoir 236 for pumping liquid to the apparatus 110, and a hose 238, as previously disclosed above in connection with the irrigation feeding system 48 of FIGS. 8 and 9A-9B. The submersible pump 234 is configured to be connected to the digital moisture meter 230 by at least one wire 226 for communication therewith. The hose 238 includes a first end 240 and a second end 242 such that the first end of the hose is configured to be connected to an adapter 244 disposed on the submersible pump 234 and the second end of the hose is configured to be connected to a nozzle 180 via a thread cap 182 and an adapter 178 disposed on the outer wall 116 of the container 114. Liquid 126 is pumped from the liquid holding reservoir 236 through the hose 238 to the container 114 such that liquid is dispersed through the plant growing medium 112 at appropriate flow rates and intervals when the plant reaches a predetermined moisture and humidity level. As with the prior embodiments of the irrigation feeding system 48, it should be understood that the irrigation feeding system 228 disperses liquid into the plant growing medium at any appropriate flow rate and interval when a predetermined moisture and humidity level is reached by the plant.

It should be understood that the irrigation feeding system 228 may be used with a plurality of submersible pumps 234 on a submersible power strip 250 having a single power supply.

In some embodiments, wireless features may be enabled to interact with a computer or mobile device 246 such that an App 248 can program or monitor the irrigation feeding system 228 to view feeding history, set times, feeding schedules, and operate the digital moisture meter 230. Referring now to FIG. 22A is a top view of an exemplary embodiment of an irrigation apparatus 252 according to the present disclosure. The irrigation apparatus includes a geometrically shaped container 254 of variable size having an outer wall 256 with an inner surface 258, an open top 260, and a base portion 262 configured with a plurality of holes 264 for receiving liquid therethrough. According to the present invention, the plurality of holes 264 are configured as raised half-circles or louvers 266 to block light and receive air, water, and nutrients, for the plant growing medium 268. It should be understood that the raised half-circles or louvers can be configured of any suitable size and are sized relative to the size of the container.

The container 254 is configured with at least one center opening 270 therethrough having an inner wall 272 for receiving a plant 274. The at least one center opening 270 has at least one longitudinal opening 276 extending therefrom to the outer wall 256 to allow placement of the container 254 on the plant 274 or to allow removal of the container from the plant. In this embodiment, the container is configured to bend to fit around the base of variable size plants. The at least one longitudinal opening 276 is configured to have the same height wall as the outer wall 256 of the container 254 while receding to a variable degree to the inner wall 272 of the at least one center opening 270. It should be understood that the at least one center opening can be configured of any suitable size and is sized relative to the size of the container.

In some embodiments, the at least one longitudinal opening 276 is configured with an overhang lip portion 278 at opposing sides for blocking light to the plant growing medium 268. It should be understood that the overhang lip portion can be configured of any suitable material, shape, and size for blocking light to the plant growing medium.

In some embodiments, each corner of the base portion 262 is configured with a hole 280 to aid in the drainage of liquid from the container 254. It should be understood that the hole can be configured of any suitable size for drainage purposes.

FIG. 22B is a cross-sectional view of the irrigation apparatus 252 of FIG. 22A. As illustrated in FIG. 22B, the container is further configured with a plurality of geometrically shaped stakes 282 of variable size extending therefrom the base portion 262 for providing stability for the apparatus 252 to be secured in the plant growing medium 268.

In accordance with the present disclosure, the container 254 may be fabricated of a combination of translucent and opaque materials as two separate parts or as an over mold that can be molded together such that the outer wall 256 of the container 254 is translucent and the base portion 262 is opaque for blocking light to the plant growing medium 268.

As with the earlier embodiments described herein, it should be understood that the container 254 may be fabricated of any sturdy material capable of retaining liquids or fluids (e.g., water), including metal, plastic, and the like. It should be further understood that the container 254 can be manufactured to suit any plant size growing medium and is sized to scale.

FIG. 23 is an enlarged top view of another exemplary embodiment of the irrigation apparatus 252 according to the present disclosure. The container 254 is configured with at least one hinge 284 or other suitable movable mechanism at a first end 286 such that the container is opened and closed at a second end 288 along with at least one of a clip or clamp 290 or via one male to one female ratio or other combinations of male to female ratios.

The irrigation apparatus can be filled with liquid by the user pouring in liquid directly into the container or setting a hose end into the container so that the liquid may fill the container. In some embodiments, the outer wall 256 of the container 254 may be optionally configured with an adapter 292 connectable to a variable size nozzle 294 via a thread cap 296 for use with a hose or pump system.

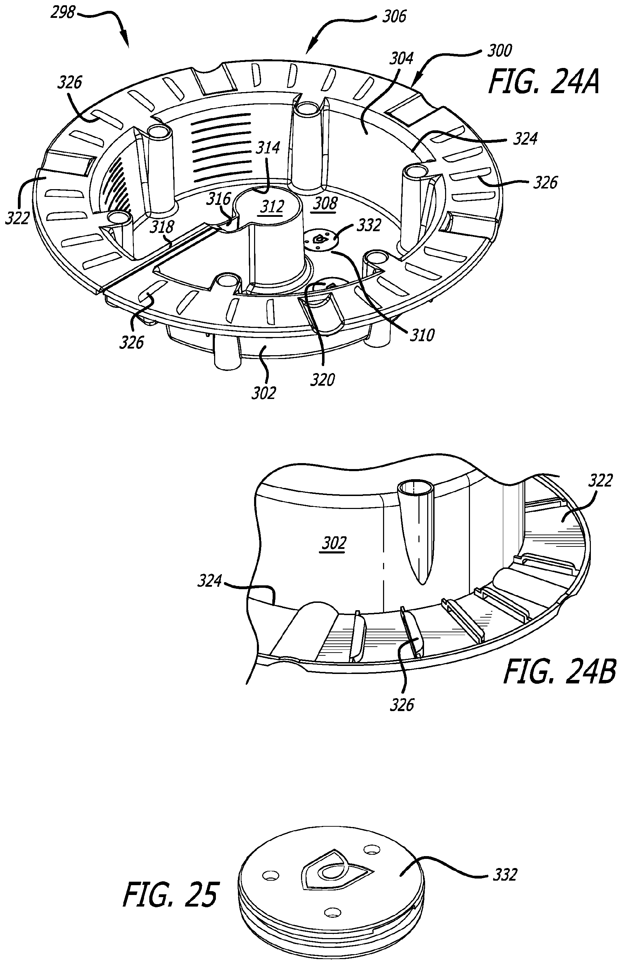

FIG. 24A is a top perspective view of an exemplary embodiment of an irrigation apparatus 298 geometrically shaped as a circle according to the present disclosure. This embodiment is the same as that previously disclosed in FIGS. 17-18 with the addition of a further structural feature described below. The irrigation apparatus 298 includes a geometrically shaped container 300 of variable size having an outer wall 302 with an inner surface 304, an open top 306, and a base portion 308 configured to cover the plant growing medium. The base portion 308 is configured with a plurality of holes 310 (one shown covered with a dripper 320 and the other with a holed dripper cap 332) for receiving liquid therethrough.

As with the previous embodiments described herein, the container 300 is configured with at least one center opening 312 therethrough having an inner wall 314 for receiving a plant. The at least one center opening 312 has at least one longitudinal opening 316 extending therefrom to the outer wall 302 to allow placement of the container 300 on the plant or to allow removal of the container from the plant. In this embodiment, the container 300 is configured to bend to fit around the base of variable size plants. The at least one longitudinal opening 316 is configured to have the same height wall as the outer wall 302 of the container 300 while receding to a variable degree to the inner wall 314 of the at least one center opening 312. It should be understood that the at least one center opening can be configured of any suitable size and is sized relative to the size of the container.

In some embodiments, the at least one longitudinal opening 316 is configured with an overhang lip portion 318 at opposing sides for blocking light to the plant growing medium. It should be understood that the overhang lip portion can be configured of any suitable material, shape, and size for blocking light to the plant growing medium.

The plurality of holes 310 are configured with at least one dripper 320 for receiving liquid extending therethrough the base portion 308 such that the at least one dripper feeds the plant growing medium at variable flow rates and intervals and provides stability for the apparatus 298 to be secured in the plant growing medium. It should be understood that the dripper may be configured to feed the plant growing medium at any suitable flow rate and interval in accordance with the present disclosure.

As illustrated in FIG. 24A, the container 300 may be configured with an overhang lip portion 322 formed around a top edge 324 of the outer wall 302 for blocking light to the plant growing medium. In some embodiments, the overhang lip portion 322 is configured with a plurality of geometrically shaped louvers 326 of variable size for blocking light to the plant growing medium while allowing air to pass through. It should be understood that the geometrically shaped louvers can be configured of any suitable size and are sized relative to the size of the overhang lip portion.

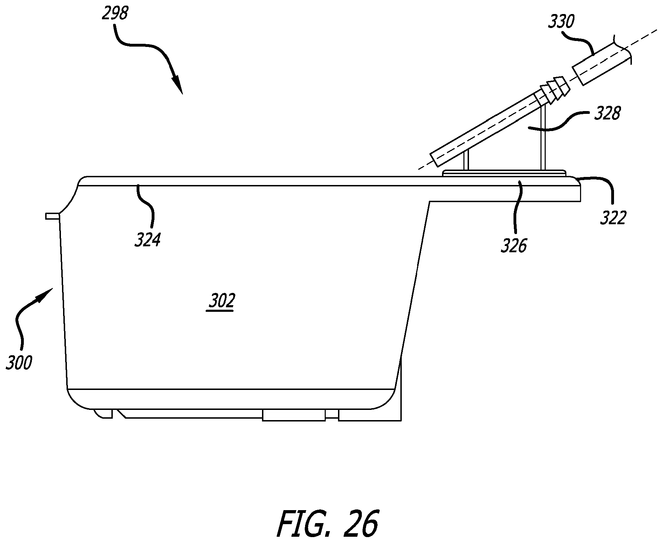

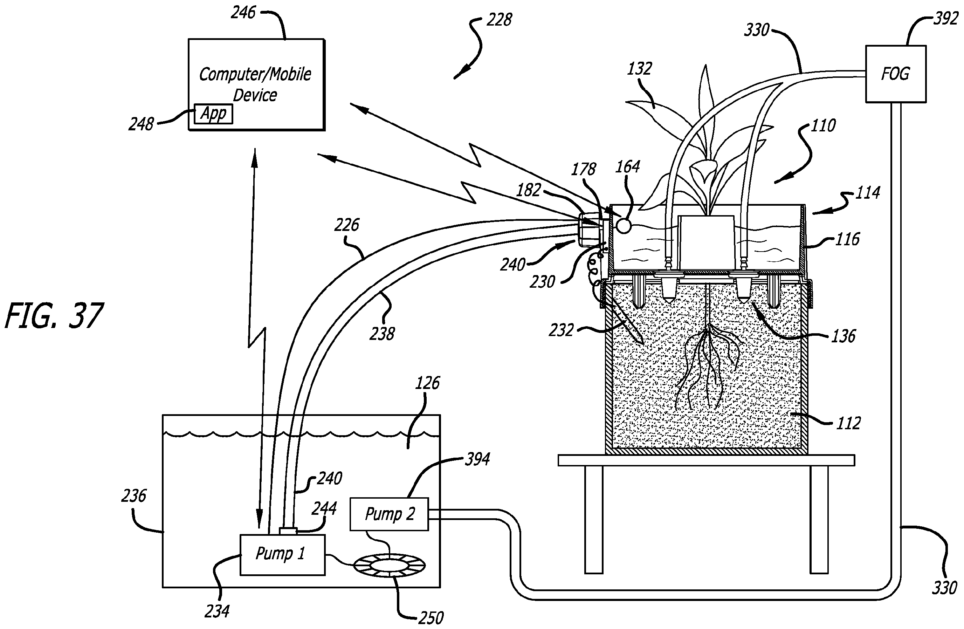

In further embodiments, the plurality of geometrically shaped louvers 326 may be configured to receive at least one barbed louver insert 328 for providing compatibility of the apparatus 298 for use with an irrigation feeding system (FIG. 37) such that the barbed louver insert is configured to connect to a hose 330 (FIG. 26). It should be understood that the barbed louver insert can be configured of any suitable size and is sized relative to the size of the geometrically shaped louvers 326. The barbed louver insert can be fabricated from any suitable sturdy material, such as plastic (e.g., acrylonitrile butadiene styrene (ABS)), synthetic polymers (e.g., nylon) and the like, and can be injection molded as a single piece.

FIG. 24B is a partial bottom perspective view of the irrigation apparatus 298 of FIG. 24A according to the present disclosure.

In some embodiments, the plurality of holes may be configured to receive at least one plug or dripper cap 332 (FIG. 25) having at least one hole for receiving liquid therethrough. The holed plug or dripper cap 332 is not contemplated for use with any dripper or emitter affixed thereto as gravity slows the pressure of the liquid during operation as liquid passes through the holed plug or dripper cap 332. As with the previously disclosed embodiments described herein, the plurality of holes 310 not in use may be sealed with a plug 208 (FIG. 19). It should be understood that the plug or dripper cap 332 and plug 208 can be fabricated of any suitable material, such as rubber or plastic, and are sized relative to the size of the plurality of holes.

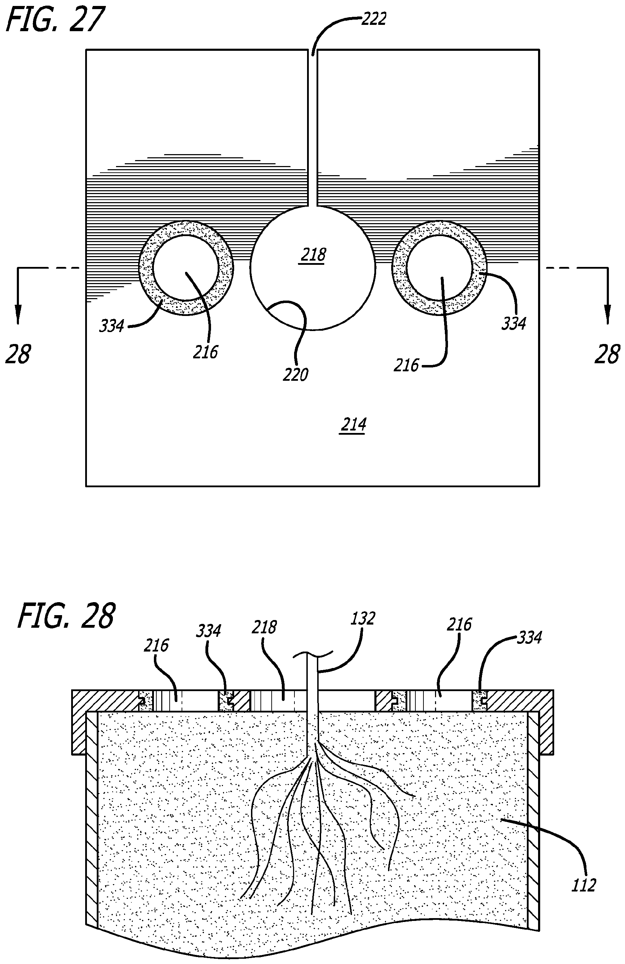

Referring now to FIG. 27 is a top plan view of another exemplary embodiment of the irrigation apparatus of FIG. 19 shown with a pair of over mold rings 334 according to the present disclosure. As previously disclosed herein, the irrigation apparatus includes a geometrically shaped top 214 of variable size configured with a plurality of holes 216 for receiving liquid therethrough. The top 214 is configured with at least one center opening 218 therethrough having an inner wall 220 for receiving a plant 132. The at least one center opening 218 has at least one longitudinal opening 222 extending therefrom to an outer wall 224 to allow placement of the top 214 on the plant 132 or to allow removal of the top from the plant. The plurality of holes 216 are configured with at least one dripper 136 (FIG. 19) for receiving liquid extending therethrough the top 214 such that the at least one dripper feeds the plant growing medium 112 at variable flow rates and intervals and provides stability for the apparatus to be secured in the plant growing medium.

As illustrated in FIG. 27, the plurality of holes 216 are each configured with an over mold ring 334 disposed therearound for providing an improved seal and interchangeability of the at least one dripper into the top 214 during use of the irrigation apparatus. The over mold rings 334 are separately molded and can be affixed to the geometrically shaped top 214 via conventional over-molding processes. It should be understood that the over mold rings can be fabricated from a rubber material or any suitable elastic polymeric material.

FIG. 28 is a cross-sectional view taken along the line 28-28 of the irrigation apparatus of FIG. 27 setting atop of the plant growing medium 112.

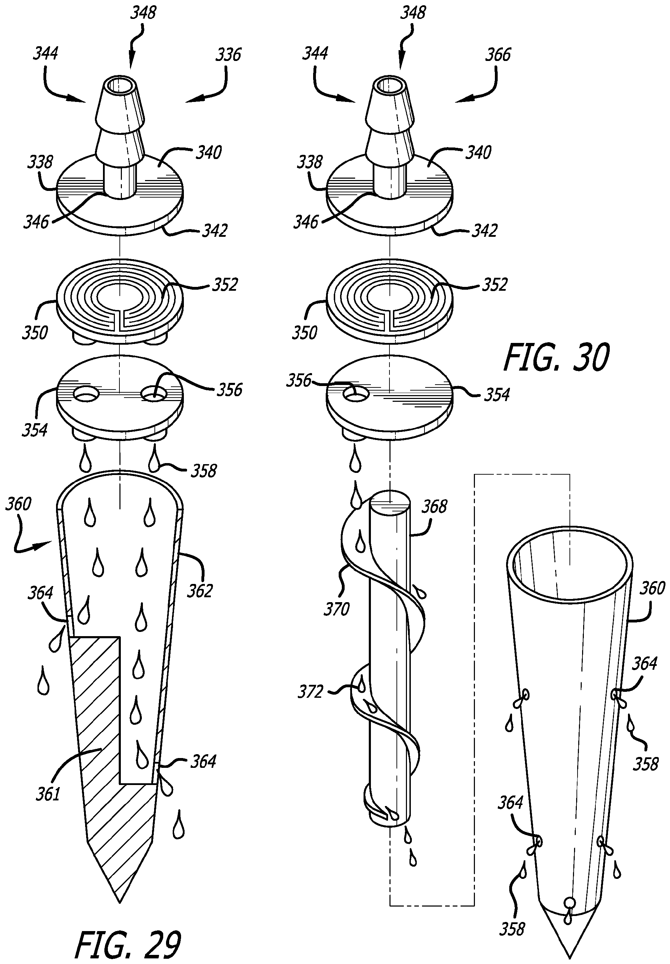

FIG. 29 is an exploded top perspective view and partial cross-sectional view of an exemplary embodiment of a dripper 336 for use with an irrigation feeding system for dispersing liquid through a plant growing medium according to the present disclosure. The dripper 336 includes an emitter top plug 338 having a top surface 340 and a bottom surface 342, a nozzle 344 having a first end 346 and a second end 348 such that the first end is configured to be affixed to the top surface of the emitter top plug, and a variable emitter path section 350 having at least one tortuous path 352 to control liquid flow. The dripper further includes an emitter bottom plug 354 having at least one hole 356 to discharge liquid 358 therefrom in which the emitter top plug 338 and the emitter bottom plug are configured to encase the variable path section 350, and a longitudinal exterior emitter plunger 360 having an outer surface 362 configured with a plurality of holes 364 for dispersing liquid 358 therethrough in which the exterior emitter plunger is configured to attach to the emitter bottom plug. It should be understood that the exterior emitter plunger 360 can be configured with or without a break section 361 inside the exterior emitter plunger for directing liquid to various points of the root zone within the plant growing medium.

Referring now to FIG. 30 is an exploded top perspective view of another exemplary embodiment of a dripper 366 according to the present disclosure. In addition to the structural features described above in FIG. 29, dripper 366 further includes a longitudinal interior emitter plunger 368 having a spiral wrapping 370 affixed thereon such that the interior emitter plunger is configured to attach to the emitter bottom plug 354 and be encased by the exterior emitter plunger 360. The spiral wrapping 370 is configured as a liquid path 372 in which during operation liquid 358 flows down the spiral wrapping and dispenses from the exterior emitter plunger 360 along various points of the root zone within the plant growing medium.

As an alternative to the embodiment of FIG. 30, the longitudinal interior emitter plunger 368 can have encased spiral tubing (not shown) configured for receiving liquid as a liquid path affixed thereon such that the interior emitter plunger is configured to attach to the emitter bottom plug 354 and be encased by the exterior emitter plunger 360. The encased spiral tubing (not shown) can be configured with a plurality of holes along the length thereof such that the plurality of holes are configured to be in alignment with the plurality of holes on the outer surface of the longitudinal exterior emitter plunger for dispersing liquid therethrough along various points of the root zone within the plant growing medium.

In some embodiments, the nozzle 344 is configured to be barbed 376, as illustrated in FIGS. 29 and 30.

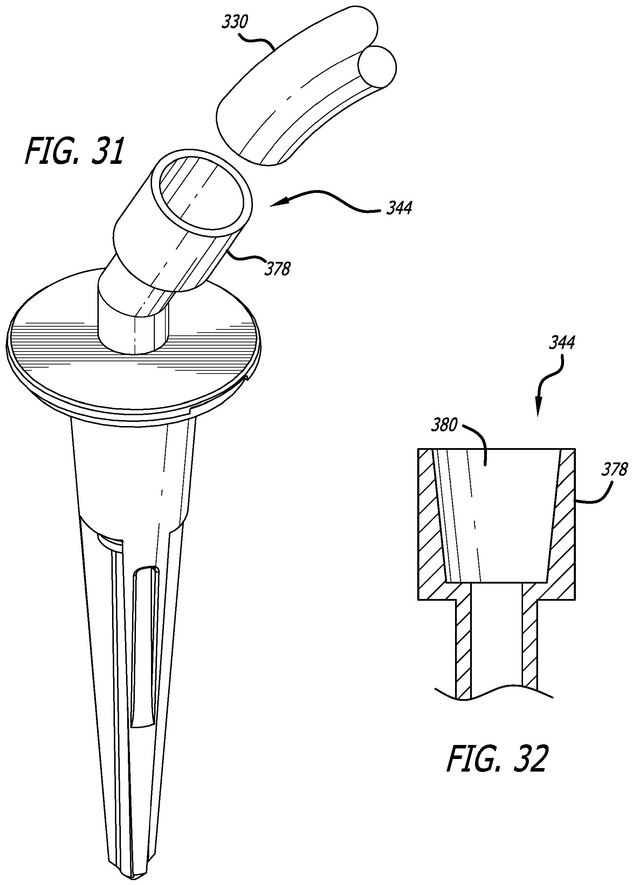

In some embodiments, the nozzle 344 is cylindrically shaped 378 and is configured with a conical shaped interior section 380 for receiving a hose 330, as illustrated in FIGS. 31 and 32.

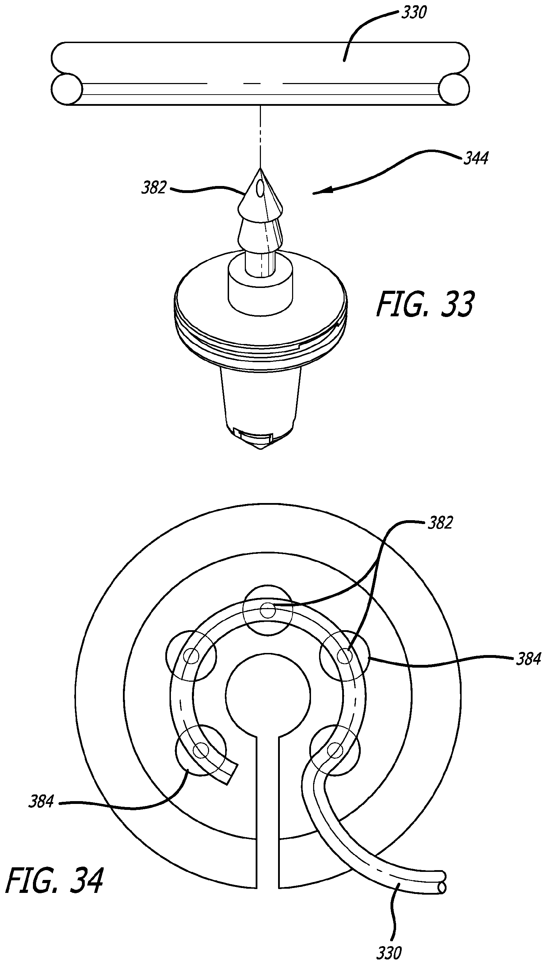

In some embodiments, the nozzle 344 is configured to be pierced 382 for piercing a hose 330, as illustrated in FIG. 33. FIG. 34 is a top plan view of a series of piercing nozzles 382 affixed to a series of drippers 384 from a single line of pressure of the hose source 330 via a pump (not shown) according to the present disclosure. It should be understood that any number of drippers may be used in series with the piercing nozzles according to the user's preferences.

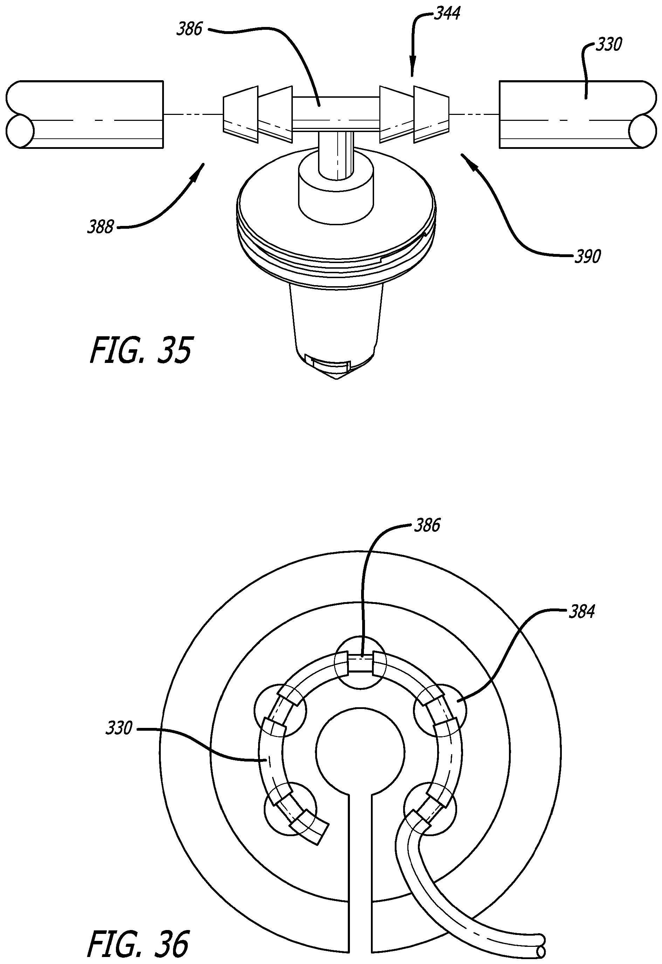

In some embodiments, the nozzle 344 is configured to be T-shaped 386 having a first side 388 and a second side 390 such that each side is barbed for receiving a hose 330, as illustrated in FIG. 35. FIG. 36 is a top plan view of a series of T-shaped nozzles 386 affixed to a series of drippers 384 from a single line of pressure of the hose source 330 via a pump (not shown) according to the present disclosure. It should be understood that any number of drippers may be used in series with the T-shaped nozzles according to the user's preferences.

It should be further understood that the various nozzles disclosed above in FIGS. 29-36 can be configured for use with any of the drippers previously disclosed herein. The nozzle can be fabricated of any suitable sturdy material, such as plastic, and can be molded as one piece affixed to the top surface 340 of the emitter top plug 338 by ultrasonic welding. In other embodiments, the nozzle is interchangeable and is affixed to the top surface 340 of the emitter top plug 338 by snapping in the top surface.

In accordance with the present disclosure, suitable flow rates for the drippers or emitters disclosed herein include as follows: 2.0, 4.0, 8.0, 16.0, 24.0, 32.0, 40.0 liters per hour (1/2, 1, 2, 4, 6, 8 and 10 gallons per hour). It is further contemplated in accordance with the present disclosure that the drippers or emitters disclosed herein can be used with any of the irrigation apparatuses (except irrigation apparatus 252 with the raised half-circles or louvers 266 in which no drippers or emitters are used) previously disclosed or can be used on their own without any irrigation apparatus according to the user's preferences.

FIG. 37 is a side elevational view of an exemplary embodiment of the irrigation feeding system of FIG. 21 with a pressured fogger 392 according to the present disclosure. It should be understood that any of the drippers or emitters previously disclosed herein can be used with a pressured fogger or humidifier via a pump 394 in which fog or humidity is pumped through the hose 330 and into the dripper or emitter 136 within the plant growing medium of the irrigation feeding system 228. Any suitable fogger or humidifier can be used in accordance with the irrigation feeding system of the present disclosure.

## Claims

1. An irrigation apparatus (10) for dispersing liquid through a plant growing medium (12), the apparatus (10) comprising:
a geometrically shaped container (14) of variable size having an outer wall (20) with an inner surface (22), an open top (24), and a base portion (26) configured to cover the plant growing medium (12), wherein the base portion (26) is configured with a plurality of holes (28) for receiving liquid therethrough;
the container (14) being configured with at least one center opening (32) therethrough ) having an inner wall (34) for receiving a plant (36), the at least one center opening (32) having at least one longitudinal opening (33) extending therefrom to the outer wall (20) to allow placement of the container (14) on the plant (36) or to allow removal of the container (14) from the plant (36);
wherein the container (14) is configured with a plurality of geometrically shaped stakes (35) of variable size extending therefrom the base portion (26) for providing stability for the apparatus (10) to be secured in the plant growing medium (12);
**characterized in that**
the plurality of holes (28) are configured as raised half-circles or louvers to block light and receive air, water, and nutrients.

2. The apparatus (10) of claim 1, wherein each corner of the base portion (26) is configured with a hole (280) to aid in the drainage of liquid from the container (14).

3. The apparatus (10) of claim 1, wherein the outer wall (20) of the container (14) is configured with an adapter connectable to a variable size nozzle (180) via a thread cap (182) for use with a hose or pump system.

4. The apparatus (10) of claim 1, wherein the container (14) is fabricated of a combination of translucent and opaque materials as separate parts or as an over mold that is molded together such that the outer wall (20) is translucent and the base portion (26) is opaque for blocking light to the plant growing medium (12).

5. The apparatus (10) of claim 1, wherein the at least one longitudinal opening (33) ) is configured with an overhang lip portion (68) at opposing sides for blocking light to the plant growing medium (12).

## Patentansprüche

1. Bewässerungsvorrichtung (10) zum Verteilen von Flüssigkeit durch ein Pflanzennährmedium (12), wobei die Vorrichtung (10) Folgendes umfasst:
einen geometrisch geformten Behälter (14) unterschiedlicher Größe (20), der eine Außenwand (20) mit einer Innenoberfläche (22), eine offene Oberseite (24) und einen Bodenabschnitt (26), der dazu ausgebildet ist, das Pflanzennährmedium (12) abzudecken, aufweist, wobei der Bodenabschnitt (26) mit einer Vielzahl von Löchern (28) zum Aufnehmen von Flüssigkeit dadurch hindurch ausgebildet ist;
wobei der Behälter (14) mit mindestens einer mittigen Öffnung (32) dadurch hindurch ausgebildet ist, die eine Innenwand (34) zum Aufnehmen einer Pflanze (36) aufweist, wobei die mindestens eine mittige Öffnung (32) mindestens eine sich davon zu der Außenwand (20) erstreckende längslaufende Öffnung (33) aufweist, um das Platzieren des Behälters (14) auf der Pflanze zu ermöglichen oder das Abnehmen des Behälters (14) von der Pflanze (36) zu ermöglichen;
wobei der Behälter (14) mit einer Vielzahl von geometrisch geformten Dornen (35) unterschiedlicher Größe ausgebildet ist, die sich von dem Bodenabschnitt (26) erstrecken, um Stabilität für die in dem Pflanzennährmedium (12) zu fixierende Vorrichtung (10) bereitzustellen;
**dadurch gekennzeichnet, dass**
die Vielzahl von Löchern (28) als erhöhte Halbkreise oder Lamellen ausgebildet ist, um Licht zu blockieren und Luft, Wasser und Nährstoffe aufzunehmen.

2. Vorrichtung (10) nach Anspruch 1, wobei jede Ecke des Bodenabschnitts (26) mit einem Loch (280) ausgebildet ist, um das Auslaufen von Flüssigkeit aus dem Behälter (14) zu unterstützen.

3. Vorrichtung (10) nach Anspruch 1, wobei die Außenwand (20) des Behälters (14) mit einem Adapter ausgebildet ist, der zur Verwendung mit einem Schlauch- oder Pumpensystem über eine Gewindekappe (182) mit einem Stutzen (180) unterschiedlicher Größe verbindbar ist.

4. Vorrichtung (10) nach Anspruch 1, wobei der Behälter (14) aus einer Kombination von lichtdurchlässigen und opaken Materialien hergestellt ist, als separate Teile oder als Umspritzung, die derart miteinander gespritzt ist, dass die Außenwand (20) lichtdurchlässig und der Bodenabschnitt (26) zum Blockieren von Licht zu dem Pflanzennährmedium (12) opak ist.

5. Vorrichtung (10) nach Anspruch 1, wobei die mindestens eine Längsöffnung (33) mit einem überhängenden Lippenabschnitt (68) an gegenüberliegenden Seiten zum Blockieren von Licht zu dem Pflanzennährmedium (12) ausgebildet ist.

## Revendications

1. Appareil d'irrigation (10) servant à disperser un liquide à travers un milieu de culture de plante (12), l'appareil (10) comportant :
un contenant de forme géométrique (14) de taille variable ayant une paroi extérieure (20) avec une surface intérieure (22), une partie supérieure ouverte (24), et une partie de base (26) configurée pour couvrir le milieu de culture de plante (12), dans lequel la partie de base (26) est configurée avec une pluralité de trous (28) servant à recevoir du liquide au travers de ceux-ci ;
le contenant (14) étant configuré avec au moins une ouverture centrale (32) au travers de celui-ci ayant une paroi intérieure (34) servant à recevoir une plante (36), ladite au moins une ouverture centrale (32) ayant au moins une ouverture longitudinale (33) s'étendant en provenance de celle-ci jusqu'à la paroi extérieure (20) pour permettre la mise en place du contenant (14) sur la plante (36) ou pour permettre le retrait du contenant (14) en provenance de la plante (36) ;
dans lequel le contenant (14) est configuré avec une pluralité de piquets de forme géométrique (35) de taille variable s'étendant à partir de la partie de base (26) servant à apporter de la stabilité pour l'appareil (10) à des fins d'assujettissement dans le milieu de culture de plante (12) ;
**caractérisé en ce que**
les trous de la pluralité de trous (28) sont configurés sous la forme d'évents ou de demi-cercles surélevés pour bloquer la lumière et pour recevoir de l'air, de l'eau et des éléments nutritifs.

2. Appareil (10) selon la revendication 1, dans lequel chaque angle de la partie de base (26) est configuré avec un trou (280) pour faciliter le drainage de liquide en provenance du contenant (14).

3. Appareil (10) selon la revendication 1, dans lequel la paroi extérieure (20) du contenant (14) est configurée avec un adaptateur en mesure d'être raccordé sur une buse de taille variable (180) par le biais d'un bouchon à filetage (182) à des fins d'utilisation avec un système de pompe ou de tuyau.

4. Appareil (10) selon la revendication 1, dans lequel le contenant (14) est fabriqué à partir d'une combinaison de matériaux translucides et opaques sous la forme de pièces séparées ou sous la forme d'une pièce de surmoulage qui sont moulées ensemble de telle sorte que la paroi extérieure (20) est translucide et la partie de base (26) est opaque pour bloquer la lumière sur le milieu de culture de plante (12).

5. Appareil (10) selon la revendication 1, dans lequel ladite au moins une ouverture longitudinale (33) est configurée avec une partie formant lèvre en porte-à-faux (68) au niveau de côtés opposés pour bloquer la lumière sur le milieu de culture de plante (12).
